# EUROPÄISCHE PATENTSCHRIFT

(11) **EP 2 243 655 B1**
(45) Veröffentlichungstag und Bekanntmachung des Hinweises auf die Patenterteilung: **03.07.2013**
(21) Anmeldenummer: 10166107.2
(22) Anmeldetag: 31.10.2002
(51) Int. Cl.: B60K 31/18, B60K 31/04, B60T 7/04, F02D 11/02, G05G 1/30, B60K 26/02

(54) **Vorrichtung mit zusätzlicher Rückstellkraft am Gas-Pedal in Abhängigkeit von der Sollwert- Abweichung eines Fahrzeugparameters**
Device with additional restoring force on the gas pedal based on the deviation of a vehicle paramenter from the set value
Dispositif doté d'une force de restauration supplémentaire sur la pédale de gaz en fonction de l'écart de la valeur de consigne d'un paramètre de véhicule

(30) Priorität: 05.11.2001 DE 10153837; 26.11.2001 DE 10157622; 02.05.2002 DE 10219674; 13.02.2002 DE 10206102; 30.10.2002 DE 10250456
(43) Veröffentlichungstag der Anmeldung: 27.10.2010
(62) Teilanmeldung aus: 02785347.2
(73) Patentinhaber: Continental Teves AG & Co. oHG, 60488 Frankfurt (DE)
(72) Erfinder: Kroll, Wolfgang, 65207, Wiesbaden (DE); Görlach, Johannes, 35428, Langgöns (DE); Haverkamp, Martin, 60385 Frankfurt (DE); Schiel, Lothar, 65719, Hofheim (DE); Klimes, Milan, Niles, MI 49120 (US); Rüffer, Manfred, 65843, Sulzbach (DE); Von Hayn, Holger, 61118, Bad Vilbel (DE); Queisser, Torsten, 02708, Obercunnersdorf (DE); Ritter, Wolfgang, 61440, Oberursel (DE); Schonlau, Jürgen, 65396, Walluf (DE)

(56) Entgegenhaltungen:
- DE-A1- 19 620 929
- US-A- 2 822 881
- US-A- 4 367 805
- US-A- 4 526 060
- US-A- 5 568 797

## Beschreibung

Die Erfindung betrifft eine Vorrichtung nach dem Oberbegriff des Patentanspruchs 1.

Die Erfindung betrifft eine Vorrichtung zur Steuerung eines Parameters eines Kraftfahrzeuges (beispielsweise der Geschwindigkeit eines Fahrzeugs) welche ein als Pedal ausgestaltetes Steuerorgan aufweist. Über das Steuerorgan beispielsweise das Gas-Pedal (oder Bremspedal) wird in die Zufuhr von Treibstoff zu dem Motor und damit die Fahrgeschwindigkeit des Fahrzeugs gesteuert (oder über die Aktivierung des Bremssystems die Geschwindigkeit reduziert). Für eine sichere und vorschriftsmäßige Fahrweise eines Fahrzeugs ist die Einhaltung einer geeigneten und/oder vorgeschriebenen Geschwindigkeit sehr wichtig. Um die augenblickliche Geschwindigkeit eines Fahrzeugs zu erkennen, muss der Fahrer bei den bekannten Anzeigen diese an einem Tachometer ablesen. Während der Zeit, in der der Fahrer dieses Meßinstrument abliest und das Ergebnis bewertet ist es ihm nur bedingt möglich auf den Verkehr zu achten.

Bei der Gestaltung eines Anzeigesystems insbesondere der Fahrgeschwindigkeit eines Fahrzeugs ist somit darauf zu achten, dass die Ablesung einerseits und die Durchführung der eigentlichen Fahreraufgabe (Einhaltung des Kurses, der Geschwindigkeit und des Abstandes zu anderen Fahrzeugen) sich möglichst wenig gegenseitig behindern. Hierzu sollten Warnanzeigen beispielsweise hinsichtlich einer zu großen Geschwindigkeit, so auffällig und leicht interpretierbar sein wie möglich, so dass der Fahrer besonders schnell und fehlerfrei darauf reagieren kann. Die Reaktionszeit auf eine Anzeige ist um so kürzer, je kompatibler sie mit dem zugehörigen Bedienelement ist, das heißt je höher der erkennbare Zusammenhang zwischen der Anzeige und dem Bedienelement selber ist.

Hierzu wurde aus der DE-OS 255 429 der Vorschlag bekannt, dass in Abhängigkeit von der Abweichung eines Parameters des Fahrzeugs (beispielsweise Abstand von einem anderen Fahrzeug, Abweichung von einer Sollgeschwindigkeit) eine Kraft in das die Geschwindigkeit des Fahrzeugs steuernde Pedal eingekoppelt wird. Eine derartige Funktion wird nachfolgend als Force-Feedback-Funktion bezeichnet und vielfach als FF-Funktion angegeben. Ein mit einer derartigen Funktion beaufschlagtes Pedal wird weiter unten vielfach als Force-Feedback-Pedal bzw.FFP angegeben.

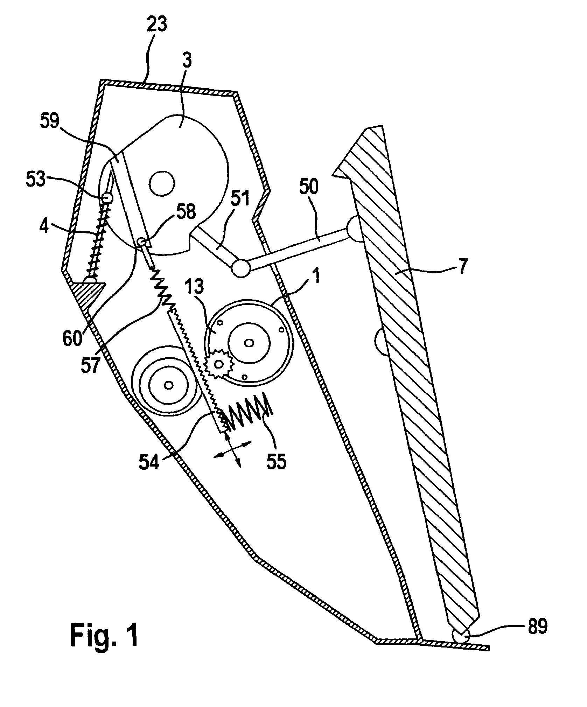

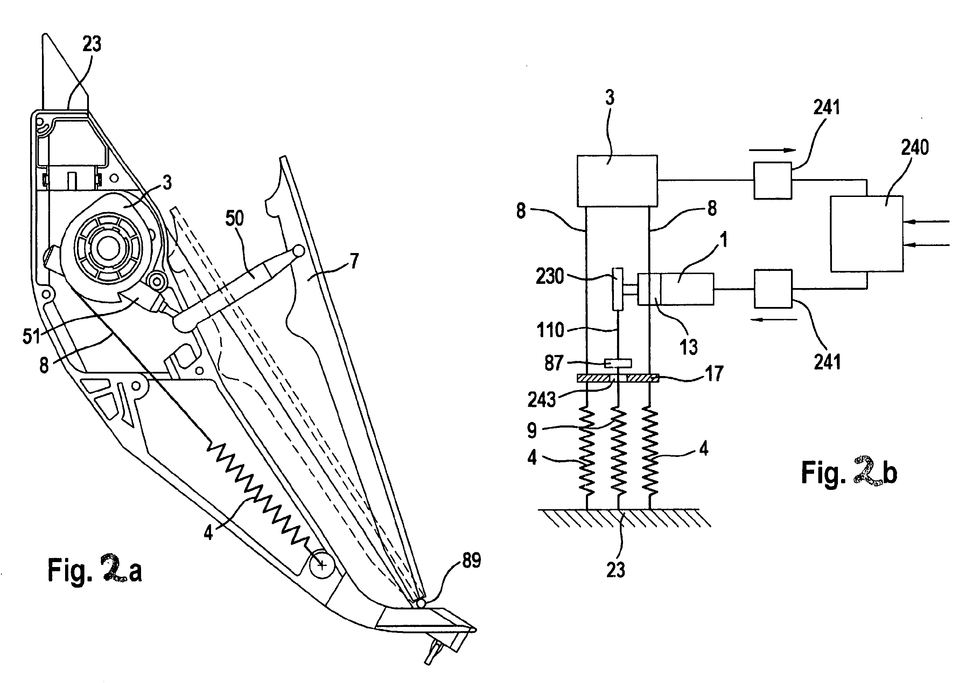

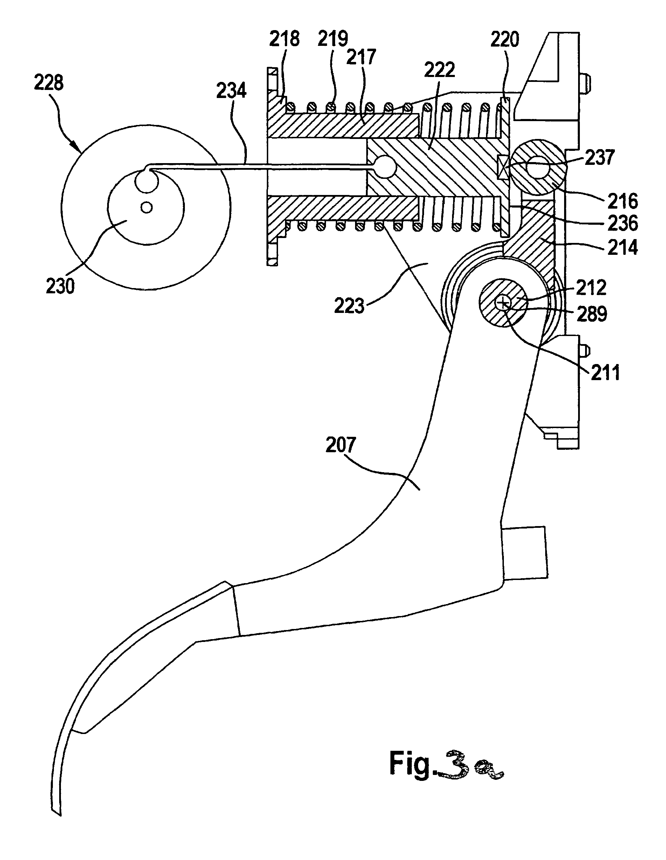

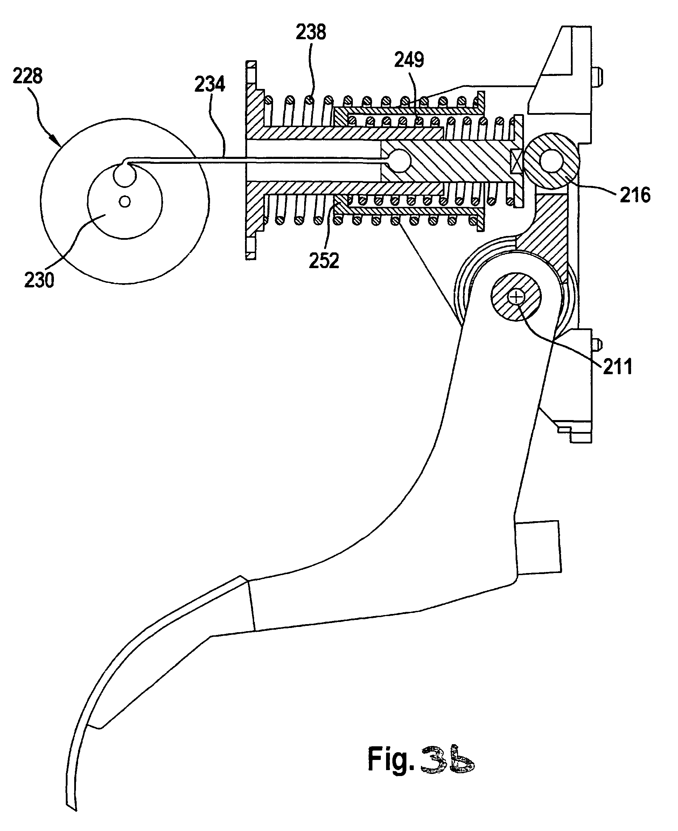

In der EP-PS 709245 wird hierzu beschrieben, wie bei einer Überschreitung der Sollgeschwindigkeit durch einen Rechner gesteuert eine Kraft auf das die Geschwindigkeit steuernde Pedal ausgeübt wird, die dem Druck des Fahrerfußes entgegenwirkt und so den Fahrer warnt. Da der Fahrer hierbei das Gefühl hat, die einer höheren Fahrgeschwindigkeit entsprechende Stellung des Gas-Pedals schon erreicht zu haben, weil ihm eine entsprechende Pedalkraft entgegenwirkt, wird der Fahrer hierdurch quasi diszipliniert und dazu geführt, die vorgeschriebene oder die für eine sichere Fahrt geeignete Geschwindigkeit einzuhalten. Dabei ist ein Drehhebel mit einem Gaszug gekoppelt. Liegt die ist-Geschwindigkeit unter der soll-Geschwindigkeit so nimmt ein Getriebe die Stellung wie dort in Fig. 1 gezeigt an und der Hebel ist frei beweglich. Bei Erreichen der soll-Geschwindigkeit wird die Lage von Fig. 2 eingenommen und ein Stellhebel schlägt an den Steuerhebel an. Bei einer weiteren Abweichung der ist-Geschwindigkeit von der soll-Geschwindigkeit wird ein Zustand wie dort in Fig. 3 gezeigt eingenommen, bei der der Stellhebel durch den Steuerhebel entgegen dem Uhrzeigersinn zurückgeholt wird , wodurch das Gas zurückgenommen wird und die vom Fahrer ausgeübte Kraft wirkungslos wird. Dem Fahrer ist es nicht möglich im Bedarfsfall die Geschwindigkeit über den eingestellten Wert der Geschwindigkeit zu erhöhen.

Aus der gattungsbildenden US-PS 4367805 ist es bekannt die zur Dosierung des Gases dienende Leitung mit einem Hebel zu koppeln, der mit einem durch einen Motor angetriebenen Stellhebel zusammenwirkt. Beim Niederdrücken des Pedals wird der Hebel rechts herum gedreht. Wird der Tempomat eingeschaltet wird der Stellhebel in die Stellung gebracht, die der eingestellten Geschwindigkeit entspricht. Der Drehwinkel des Stellhebels hängt ab von der Differenz aus der ist-Geschwindigkeit und der soll-Geschwindigkeit. Solange die ist-Geschwindigkeit kleiner als die soll-Geschwindigkeit ist, ist die Lage der beiden Hebel frei veränderbar. Beim Überschreiten der soll-Geschwindigkeit muss bei der Bestätigung des Pedals gegen eine Feder gearbeitet werden. Im Ergebnis wächst die Gegenkraft in Abhängigkeit von der Differenz zwischen ist- und soll-Geschwindigkeit, eine schlagartige Erhöhung der Rückstellkraft ist nicht vorgesehen.

In der US-PS 5568797 wird über ein Pedal zusammen mit einer Drossel ein Hebel verstellt. Ein Verdrehen des Hebels nach rechts bedeutet eine Erhöhung der Geschwindigkeit. Die soll-Geschwindigkeit wird über eine Motorwelle mit dem daran befestigten Zeiger eingestellt, wobei ein Verdrehen nach rechts eine höhere soll-Geschwindigkeit bedeutet. Diese bekannte Einrichtung besitzt folgenden Nachteil: die Kraft der Feder wirkt anfangs der Rückstellkraft der Feder entgegen, wird dann zu Null und wirkt anschließend in Abhängigkeit von der Differenz der Geschwindigkeiten wachsend in Richtung der Rückstellkraft.

Bei der gattungsbildenden US-PS 2822881 geschieht die Voreinstellung mittels einer verdrehbaren Platte. Die ist-Geschwindigkeit wird durch einen Zeiger abgebildet. Überschreitet die ist- Geschwindigkeit die soll-Geschwindigkeit so wird ein Kontakt durch den Zeiger geschaltet und ein Relais schaltet einen Motor ein, welcher mittels einer Stange einen Schieber gegen einen Anschlag solange zurückfährt, bis die ist-Geschwindigkeit hinreichend unter der soll-Geschwindigkeit liegt und damit der Motor abgeschaltet wird. Aus der vorbekannten Steuerung ist außerdem bekannt, daß die Stellkraft durch einen elektromechanischen Aktuator erzeugt wird.

Es hat sich gezeigt, dass die bekannt gewordenen Konstruktionen recht aufwendig sind und eine Reihe von der Praxis gestellten Forderungen nicht erfüllen. So muss unter anderem auch darauf geachtet werden, dass bei der Verwendung eines Elektromotors zum Aufbringen der FF-Funktion dieser nicht überlastet wird. Weiterhin muss Vorsorge dafür getroffen werden, dass unter keinen Umständen der Aktuator für die FF-Funktion bzw. die Vorrichtung selbsttätig die Geschwindigkeit des Fahrzeugs erhöhen kann und damit Gefahren verstärkt, die durch die Einrichtung gerade vermieden werden sollen. Weiterhin soll der Fahrer die volle Kontrolle über das Fahrzeug behalten. Das heißt, dem Fahrer muss es möglich sein das Gaspedal (bzw. Bremspedal) im Sinne einer höheren Geschwindigkeit oder eines stärkeren Bremsvorganges auch dann betätigen zu können wenn die FF-Funktion schon eingesetzt hat. Dieser Vorgang wird als "Übertreten" bezeichnet. Weiterhin muss sichergestellt sein, dass der Fahrer bemerkt, dass von seinem Fahrzeug die soll-Geschwindigkeit überschritten wurde. Dabei ist zu beachten, dass die auf das Pedal bei einer bestimmten Geschwindigkeit aufgebrachte Kraft sehr unterschiedlich sein kann, je nachdem wie stark das Fahrzeug beladen ist oder ob es bergauf oder bergab fährt. In der eben genannten US-PS 2822881 sind Übertretmittel offenbart, über welche die Stellkraft durch eine hinreichend große Betätigungskraft übertretbar ist.

Aus der DE 196 20929 A1 ist ein Längsregelsystem für Kraftfahrzeuge mit haptischem Gaspedal bekannt. Bei dem vorbekannten Längsregler wird eine Rückstellkraft derart erzeugt, dass bei einer Überschreitung eines Vorgabewertes des Längsreglers eine der Abweichung proportionale Rückstellkraft erzeugt wird.

In der US 4,526,060 ist ein Drosselklappen-Aktuator beschrieben, dessen Bewegungsmechanismus ein Planetengetriebe umfasst, um die Stellung der Drosselklappe und die damit verbundene Einstellung der Leerlaufdrehzahl besonders feinfühlig zu verändern. Zur schnellen Änderung der Drosselklappenstellung für eine Geschwindigkeitsregelung ist ein Direktantrieb vorgesehen.

Die Erfindung geht daher aus von einer Vorrichtung, wie sie sich aus dem Oberbegriff des Hauptanspruches ergibt.

Aufgabe der Erfindung ist es Verbesserungen der bekannten Konstruktionen zu beschreiben, durch welche die Herstellungskosten für die Vorrichtung reduziert werden, die Zuverlässigkeit der Arbeitsweise der Vorrichtung verbessert wird und zusätzlich vorteilhafte Merkmale eingeführt werden, welche die Handhabung der Vorrichtung in der Praxis vereinfachen.

Die Aufgabe wird durch die sich aus dem kennzeichnenden Teil des Hauptanspruches ergebende Merkmalskombination gelöst. Dabei ist vorgesehen, dass der Aktuator durch ein Stellsignal angesteuert wird, welches von der Abweichung einer Messgröße des Fahrzeugs von einem Sollwert, insbesondere der Fahrgeschwindigkeit von einer vorgegebenen Sollgeschwindigkeit oder Bremskraft von einer zulässigen Bremskraft, ausgelöst wird oder zumindest abhängig ist und dass die Stellkraft in Abhängigkeit von der Abweichung des Sollwertes insbesondere der ist-Geschwindigkeit von der soll-Geschwindigkeit auf das Steuerorgan einwirkt

Zum einen wird die zusätzliche Stellkraft (also die FF-Funktion) durch einen elektromechanischen Aktuator bereitgestellt. Dieser Aktuator ist vorteilhaft in Abhängigkeit von einer ganzen Reihe von Parametern steuerbar. Dies kann beispielsweise durch eine geeignete elektronische Schaltung wie durch einen Prozessor geschehen. Auf diese Weise ist es möglich die Stellkraft nicht nur von der Größe der Abweichung der ist-Geschwindigkeit von der soll-Geschwindigkeit abhängig zu machen. Vielmehr kann auch berücksichtigt werden mit welcher Kraft der Fahrer gerade das Gaspedal bedient, so dass sich die Stellkraft hiervon abhängig einstellen läßt. Auf diese Weise läßt sich vermeiden, dass der Fahrer beispielsweise bei einer Bergfahrt, bei der das Pedal mit größerer Kraft bedient werden muss, bei nur geringer Geschwindigkeitsüberschreitung die einsetzende relativ kleine Stellkraft nicht spürt. Die Stellkraft soll also zwar qualitativ von der Differenz der Geschwindigkeiten aber nicht quantitativ von dieser Differenz abhängig sein. Anders ausgedrückt, auch bei einer kleinen Abweichung der ist-Geschwindigkeit von der soll-Geschwindigkeit soll die Stellkraft mit hinreichender Größe einsetzen, damit der Fahrer spürt, dass nunmehr die soll-Geschwindigkeit überschritten wurde und das Pedal von dem Aktuator zurückgestellt wird.

Die Stellkraft setzt sprungartig ein. Hiermit ist gemeint, dass die Stellkraft nicht schleichend auftreten soll, so dass der Fahrer kaum merkt, dass die zusätzliche Stellkraft (FFP-Kraft) eingesetzt hat und möglicherweise der Täuschung unterliegt, dass Pedal-Gefühl habe sich geändert. Vielmehr ist es erwünscht, dass die zusätzliche Stellkraft ruckartig einsetzt und den Fahrer nicht in Zweifel darüber läßt, dass die Regelung das Pedal entgegen der Betätigungskraft des Fahrers zurück stellen will. Hierdurch läßt sich die notwendige Alarm-Wirkung erzielen. Wächst dagegen z. B. die Stellkraft mit der Differenz zwischen ist-Geschwindigkeit und soll-Geschwindigkeit an, so wird das faktische Anwachsen der Rückstellkraft am Pedal möglicherweise nur als ein verändertes Pedalgefühl nicht aber als Warnung verstanden.

Es wird dafür Sorge getragen, dass nur eine in einer vorgegebenen Richtung wirkende Stellkraft wirksam werden kann, eine in Gegenrichtung wirkende Stellkraft aber sicher verhindert wird. Dies kann durch geeignete Anschläge bewirkt werden. Diese Maßnahme ist insbesondere auch deshalb wichtig, weil ausgeschlossen werden muss, dass durch eine Fehlfunktion die Regelung das Fahrzeug beschleunigt anstatt dafür zu sorgen, dass das Gaspedal zurückgeschoben und damit die Geschwindigkeit abgesenkt wird. Weiter unten werden hierzu auch spezielle Bauelemente beschrieben, welche eine Kraft nur in einer einzigen Richtung übertragen können wie beispielsweise die Übertragung von Zugkräften durch Seile oder Bänder. Des weiteren müssen also Maßnahmen getroffen sein, um sicher zu verhindern, dass bei einer Fehlfunktion des Aktuators dieser nicht den Gashebel (bzw. Bremshebel) in die verkehrte Richtung fahren kann, also die Geschwindigkeit des Fahrzeugs erhöht statt sie abzusenken. Weiterhin soll die Stellkraft nur solange wirksam sein, wie die ist-Geschwindigkeit die soll-Geschwindigkeit überschreitet. Es ist also sicherzustellen, dass die Stellkraft sich bei Unterschreiten der soll-Geschwindigkeit nicht umkehrt, etwa um den Fahrer zu zwingen sich an die eingestellte soll-Geschwindigkeit zu halten.

Eine relativ einfache Konstruktion läßt sich dadurch erreichen, dass die Übertragungswege für die Stellkraft und die Rückstellkraft weitgehend gemeinsam genutzt werden. Dies kann beispielsweise dadurch geschehen, dass sowohl der Aktuator als auch die Quelle für die Rückstellkraft an der Umlenkrolle in dem Pedal-Modul angreifen. Das kann an einem gemeinsamen Angriffspunkt geschehen oder aber auch an unterschiedlichen Angriffspunkten.

Wählt man einen gemeinsamen Angriffspunkt, so kann auch das über die Umlenkrolle geführte Zugseil gemeinsam genutzt werden, so dass in Kraftrichtung vor der Umlenkrolle sowohl die Quelle für die Rückstellkraft als auch der Aktuator an den Zugseil angreifen. Dabei können die Rückstellkraft und die Stellkraft in Reihe geschaltet werden, die beiden Kräfte werden also hintereinander in das Zugseil oder seine Verlängerung eingekoppelt. Der Vorteil ist hier, dass das Übertragungsglied des Aktuators an der Rückstellfeder aufgehängt werden kann also hierdurch elastisch verankert ist. Durch das Übertragungsglied läßt sich durch Verkürzung des Seilzuges die Zugkraft der Rückstellfeder schlagartig vergrö-βern, so dass die Zugkraft um die Größe der Stellkraft vergrößert ist. Der Fahrer kann aber die Stellkraft übertreten solange die Rückstellfeder noch weiter ausgezogen werden kann.

Ein bevorzugter Aufbau unter Verwendung eines Anschlages kann darin bestehen, dass ein Elektromotor über ein Seil mit einer die Stellkraft aufbauenden Feder verbunden ist. Zieht der Elektromotor die Feder in die Länge so ist ein an dem Seil befestigter Anschlag nur mit einer entsprechend größeren Kraft in seiner Lage zu verändern. Befestigt man nun an das Zugseil der Rückstellfeder einen Gegenanschlag, so kann über die Änderung der Lage des Anschlages durch den Elektromotor der Punkt festgelegt werden, bei dem die Stellkraft wirksam wird. Dieses Prinzip ist auch dann gut anwendbar, wenn zwei Rückstellfedern vorgesehen sind, wie dies in der Praxis üblich ist. Aus Gründen der Symmetrie empfiehlt es sich in diesem Fall für jede der beiden Rückstellfedern einen Gegenanschlag vorzusehen, die gegen den von dem Elektromotor eingestellten Anschlag laufen.

In der Regel ist es günstig, den Anschlag gegenüber dem Gehäuse des Pedalmoduls zu verstellen. Hierdurch wird der Abstand des Gegenanschlages gegenüber dem Pedalhebel verändert. Eine andere Möglichkeit besteht darin, den Anschlag gegenüber dem Gehäuse des Pedalmoduls ortsfest zu halten und dem Pedalhebel mit einem in seiner Lage änderbaren Gegenanschlag zu versehen. Die Verstellung kann dabei durch einen Elektromotor geschehen, welcher an dem Pedalhebel befestigt ist.

Weiterhin kann die Rückstellfeder zusätzlich auch noch für die Stellkraft sorgen, in dem sie durch den Aktuator so weit verlängert wird, dass die Rückstellkraft sich schlagartig erhöht. Damit kann diese Feder bei geeigneter Abstimmung alle drei Aufgaben übernehmen, nämlich die Rückstellkraft und die Stellkraft zur Verfügung stellen und auch die Übertretfunktion übernehmen. In vielen Fällen ist es aber ratsam zumindest eine zusätzliche Feder einzusetzen, da hierdurch unterschiedliche Federkonstanten eingesetzt werden können. Vielfach soll auch die Funktion der Rückstellfeder nicht verändert werden, etwa wenn der Aktuator wahlweise und zusätzlich zur Verfügung gestellt werden soll.

Es wird angestrebt, die mechanisch und/oder elektrisch empfindlichen Teile vor möglicher Verschmutzung durch die umgebende Luft zu schützen. Hierzu wird vorgeschlagen die aus dem Gehäuse des Pedalmoduls herausragenden und mit dem Pedalhebel verbundenen beweglichen Teile mit Hilfe einer diese Teile umgebenden Manschette zu schützen. Andererseits ist dabei aber zu beachten, dass es möglich sein muss, den Pedalhebel gegenüber dem Gehäuse des Pedalmoduls sehr schnell bewegen zu können, beispielsweise bei einer Panik-Bremsung. Hierdurch wird aber der von der Umgebung abgedichtete Raum sehr schnell verengt, wodurch ein erheblicher Druck aufgebaut wird, welcher die Manschette gefährden kann. Daher wird vorgeschlagen, in dem Gehäuse ein Ventil vorzusehen, durch welches der Überdruck entweichen kann.

Es wurde weiterhin erläutert, einen Anschlag und/oder Gegenanschlag vorzusehen von dem die Stellkraft der Kraftquelle abgegeben beziehungsweise aufgenommen wird, sobald die ist-Geschwindigkeit in den Bereich der soll-Geschwindigkeit kommt. Eine theoretische Möglichkeit besteht darin, einen der beiden Anschläge in eine Position schon beim Einschalten der FFP-Einrichtung zu fahren, die der Gegenanschlag voraussichtlich beim Erreichen der soll-Geschwindigkeit einnehmen wird. Die Lage des Anschlages muss dann ständig nachgeregelt werden, je mehr sich die ist-Geschwindigkeit der soll-Geschwindigkeit nähert. Sehr viel einfacher aber ist es durch eine vorzugsweise elektrische oder elektronische Überwachung oder Steuerung in dem Moment die beiden Anschläge gegeneinander zu bringen, in dem die soll-Geschwindigkeit von der ist-Geschwindigkeit erreicht wird. Der Vorteil besteht insbesondere darin, dass zu diesem Zeitpunkt eindeutig ist, in welcher Position sich der Gegenanschlag bei dieser Geschwindigkeit befindet. Man braucht also nur noch die Kraftquelle einzuschalten und der Gegenanschlag wird zur richtigen Zeit seine Kraft auf den Anschlag ausüben.

Wichtig ist es auch, dass diese nicht darauf beschränkt ist, einen Fahrer auf die geeignete oder vorgeschriebene Geschwindigkeit eines Fahrzeugs hin zu führen, in dem der Fahrer bei der Betätigung des Gas-Pedals vor der Überschreitung der notwendigen Geschwindigkeit gewarnt wird oder dem Fahrer der Eindruck vermittelt wird, dass Gaspedal habe schon die von ihm gewünschte Stellung erreicht. Vielmehr ist der Gegenstand der Erfindung auch zur Betätigung anderer Steuerorgane des Fahrzeugs wie beispielsweise des Bremspedals vorteilhaft einsetzbar. Dabei kann die das Bremspedal rückstellende zusätzliche Kraft nicht nur von der geeigneten Betätigung der Bremse selbst (beispielsweise beim Anfahren) abhängig sein. Vielmehr kann die rückstellende zusätzliche Kraft am Bremspedal (oder auch am Gas-Pedal) auch durch fahrdynamische Parameter gesteuert werden wie beispielsweise bei ESP, wenn ein Fahrer zu stark bremsen will oder zu schnell in eine Kurve fahren möchte. Der Aufbau der erfindungsgemäßen Vorrichtungen wird im übrigen besonders einfach, wenn der Bremsvorgang oder die Änderung der Geschwindigkeit nicht direkt in das Pedal eingeleitet wird sondern die Pedalstellung mit Hilfe von Sensoren abgetastet wird, wie dies beispielsweise bei einem elektromechanisch oder elektrohydraulisch arbeitenden Bremssystem der Fall ist.

Die in den Ausführungsbeispielen getroffene Anordnung ist aber auch hervorragend geeignet den Fahrer dahin zu führen, dass er das Gas-Pedal in optimaler Weise bedient. Will beispielsweise ein Fahrer in seinem Fahrzeug in einer schwierigen Situation zu stark Gas geben, indem er mit einer zu großen Kraft das Gaspedal bedient, so ist es durch eine elektronische Steuerung möglich in Abhängigkeit von den dynamischen Fahrzeugparametern die Betätigung des Gaspedals mit einer hemmenden oder sogar rückstellenden Kraft zu versehen, so dass dem Fahrer der Eindruck vermittelt wird, das Gaspedal habe schon die Stellung eingenommen, die seinem (das Fahrzeug gefährdenden) Eingabewunsch entspricht. Eine gefährliche Betätigung des Bremspedals kann auf analoge Weise behoben werden. Auf diese Weise kann der Fahrer zu einem disziplinierten Fahrstil angehalten werden. Die hemmende Kraft bei der Betätigung des Pedals beziehungsweise die der Pedalkraft des Fahrers entgegenwirkende Kraft wird regelmäßig durch die Kraft eines Elektromotors herbeigeführt. Zur Erzeugung eines entsprechenden Magnetfeldes wird wiederum ein entsprechend großer Strom einer geeigneten Motor-Spule zugeführt. Die Auslösung dieses Vorgangs geschieht durch das Ausgangssignal einer Steuerung oder Regelung, welches durch die Fahrzeug-Dynamik anzeigende Parameter angesteuert wird. Das Ausgangssignal der Steuerung kann aber auch durch extern zugeführte Signale ausgelöst werden, etwa durch eine Anordnung, die in Verbindung mit einer Geschwindigkeitsbeschränkung an einer Fahrstrecke angeordnet wird.

Die Erfindung wird nachfolgend anhand von zwei Ausführungsbeispielen beschrieben, die in den Fig. 3a und 3b dargestellt sind. In der Zeichnung zeigen
Figur 1 und Figur 2 jeweils eine nicht beanspruchte Vorrichtung, die der Erklärung der anhand von Fig. 3 beschriebenen Erfindung dient und
Figur 3a, b zwei Ausführungsbeispiele nach der Erfindung.

Die Beschreibung der einzelnen Ausführungsbeispiele ist nun jeweils derart aufgebaut, dass eingangs bestehende Lösungsvorschläge diskutiert werden und danach die verbessernden Merkmale des jeweiligen Ausführungsbeispiels erläutert werden. Schließlich werden die mit dem jeweiligen Ausführungsbeispiel erreichten Vorteile erläutert und dann der wesentliche Vorteil des jeweiligen Ausführungsbeispiels angegeben sowie Möglichkeiten der Abänderung im Rahmen des Ausführungsbeispiels erläutert. In den einzelnen Ausführungsbeispielen an einander entsprechende Teile besitzen das gleiche Bezugszeichen. Soweit also ein Bezugszeichen innerhalb eines einzelnen Ausführungsbeispiels nicht gesondert erläutert wird können die Ausführungen zu diesen Bezugszeichen in anderen Ausführungsbeispielen analog herangezogen werden.

Bei den weiter unten vorgeschlagenen Ausführungsbeispielen wird ein verschiebbarer Anschlag eingesetzt. Je nach Stellung des Anschlags wirkt das Motormoment bei einer bestimmten Pedalstellung entgegen der Pedalkraft oder gegenüber dem Anschlag. Die Stellung des Anschlags muss nicht nur der gewünschten Fahrgeschwindigkeit angepasst werden, sondern auch der Fahrsituation. Bei einer anderen Lösung wird der Anschlag mittels einer verstellbaren Seillose verwirklicht. In Abweichung hierzu wird bei dem Ausführungsbeispiel nach Fig. 1 die allgemeine Funktion beschrieben.

In Figur 1 ist an einem Gehäuse 23 eines Pedalmoduls einen Pedalbrett 7 drehbar angelenkt. In dem Gehäuse 23 ist eine Kurvenscheibe 3 drehbar angeordnet. An dem als Brett ausgestalteten Pedalhebel 7 greift ein Koppelhebel 50 an, der mit einem mit der Kurvenscheibe fest verbundenen Drehhebel 51 zusammenwirkt. Man erkennt, dass bei einer Drehbewegung des Pedalhebels 7 entgegen dem Uhrzeigersinn die Kurvenscheibe 3 im Uhrzeigersinn verdreht wird. An der Kurvenscheibe 3 greift an einem Befestigungspunkt 53 eine Rückstellkraft aufbringende Rückstellfeder 4 an, die nachfolgend vielfach als Rückholfeder oder Rückzugfeder bezeichnet wird. In nicht näher beschriebener Weise wird durch das Drehen der Kurvenscheibe 3 die Menge des dem Motor zur Verfügung gestellten Gases reguliert, wobei durch das Verschwenken des Pedalhebels 7 entgegen dem Uhrzeigersinn die Menge des Gases gesteigert wird. Wird die auf den Pedalhebel 7 ausgeübte Kraft vermindert so kann sich die Rückstellfeder 4 ausdehnen und damit den Pedalhebel 7 zurück schieben.

Ausgehend von dieser an sich bekannten Konstruktion sorgt nun der in Figur 1 dargestellte erfindungsgemäße Aufbau dafür, dass bei einer Überschreitung des ist-Wertes gegenüber dem Soll-Wert der Geschwindigkeit ein Elektromotor 1 mit einem daran angeschlossenen Getriebe 13 eine Stellkraft auf den Pedalhebel 7 ausübt, welche der Rückstellkraft der Rückstellfeder 4 hinzugefügt wird.

Im Ausgangszustand besteht kein Kraftschluss zwischen der Motor-Getriebe-Einheit 1, 13 und einer Rückzugstange 54, welche durch eine Rückhaltefeder 55 in Figur 1 nach links außer Eingriff zu der Motor-Getriebe-Einheit gedrückt wird. Wird die Force-Feedback-Funktion zur Erzeugung der Stellkraft hinzugeschaltet, wird über einen nicht näher dargestellten Aktor mit dem angeschlossenen Exzenter 56 die Rückzugstange 54 in Richtung der Motor-Getriebe-Einheit gedrückt und es erfolgt der Kraftschluss (beispielsweise in Form von Reibschluß oder Formschluß) zwischen der Rückzugstange und Motor-Getriebe-Einheit. Die Kurvenscheibe 3 wird nun durch die Motor-Getriebe-Einheit in Figur 1 nach unten zurückgezogen und damit die Pedalkraft erhöht. Um das System bei einem Ausfall der Motor-Getriebe-Einheit oder des Aktors übertreten zu können, erfolgt die Verbindung zwischen der Rückzugstange und der Kurvenscheibe über eine Ausweichfeder 57. Dabei ist mit " übertreten " folgendes gemeint. Dem Fahrer wird die Möglichkeit gegeben entgegen der von der Rückzugstange 54 ausgeübten Kraft den Pedalhebel 7 entgegen dem Uhrzeigersinn tiefer treten zu können. Die Ausweichfeder 57 ist hierzu zwischen der Kurvenscheibe 3 und der Rückzugstange 54 geschaltet. Die Aufhängung der Rückzugstange kann innerhalb der Kurvenscheibe nach oben ausweichen, so dass ein plötzliches Gasgeben durch eine Fehlfunktion in der Force-Feedback-Einheit (beispielsweise durch verkehrte Drehrichtung des Motors) vermieden wird. Hierzu ist die Aufhängung 58 derart in einer Nut 59 geführt, dass sie an einer Wand 60 der Nut 59 angreifen und über Zugkräfte die Kurvenscheibe 3 entgegen dem Uhrzeigersinn verdrehen kann. Druckkräfte können nicht übertragen werden, da die Aufhängung 58 innerhalb der Nut 60 nach oben ausweichen kann. Statt der im Bild dargestellten Nut kann auch die Verbindung zwischen der Kurvenscheibe und der Rückzugstange über ein Seil erfolgen. Es muss lediglich sichergestellt werden, dass die Kraftübertragung nur in eine Richtung erfolgen kann.

Die Verbindung zwischen der Rückzugstange 54und der Motor-Getriebe-Einheit 1, 13 kann, wie in Figur 1 dargestellt ist, über Formschluss aber auch über Reibschluss erfolgen. Um beim Hinzuschalten der Force-Feedback-Funktion direkt ein höheres Motormoment zur Verfügung zu haben, läuft der Motor erst gegen ein nicht näher dargestelltes blockiertes Getriebe. Durch die Verschiebung der Rückzugstange nach rechts unten wird auch die Verriegelung des Getriebes in nicht näher gezeigter Form gelöst und man hat somit sofort das volle Motormoment für die Force-Feedback-Funktion zu Verfügung.

Die Vorteile der anhand von Fig. 1 beschriebenen Vorrichtung sind, dass der Motor nur ein- bzw. ausgeschaltet werden muss. Es ist keine Positionserkennung für den Motor erforderlich. Der Motor muss nur in eine Richtung drehen können. Kein Reversierbetrieb erforderlich. Die Teile können aus Kunststoff gefertigt werden. Das System muss nicht auf verschiedene Lastzustände eingestellt werden.

Der Regelungsaufwand ist gegenüber den bekannten Lösungen wesentlich geringer.

Das Ausführungsbeispiel nach Fig. 2a und 2b geht von dem üblichen Aufbau eines Pedalmoduls innerhalb des Gehäuses 23 aus. Damit ist der grundsätzliche Aufbau des Standard-Moduls wiederum der gleiche wie in dem vorangegangenen Ausführungsbeispiel. Da die analogen Bezugszeichen verwendet wurden gelten in soweit die schon weiter oben gemachten Ausführungen.

Wie üblich ist an dem Pedal-Modul 23 ein Pedalbrett 7 über die Drehachse 89 drehbar angelenkt. Mittels eines Rückholseiles 8 greift eine Rückholfeder 4 über eine Kurvenscheibe 3 an einem Drehhebel 51 an, welcher über einen Koppelhebel 50 auf das Pedal 7 einwirkt. Wie aus Fig. 2b ersichtlich und wie auch üblich, ist die Rückholfeder 4 durch zwei zueinander parallel geschaltete Federn gebildet. Wird auf das Pedalbrett 7 getreten, so wird der Koppelhebel 50 axial verschoben, welcher an dem Drehhebel 51 angelenkt ist. Der Drehhebel 51 ist fest mit der Kurvenscheibe 3 verbunden, so dass beim Betätigen des Pedalbrettes 7 die Kurvenscheibe 3 um einen bestimmten Winkel gedreht wird. Die Drehung erfolgt gegen den Widerstand der Rückholfeder 4, die somit versucht das Pedal 7 in seine Ausgangsstellung zurück zu ziehen, da sie über das Rückholseil 8 mit der Kurvenscheibe verbunden ist. Diese Arbeitsweise ist Standard bei den üblichen Pedal-Modulen.

Das erfindungsgemäße Ausführungsbeispiel zeichnet sich nun dadurch aus, dass an dem Rückholseil 8 beziehungsweise den beiden Rückholseilen 8 einen Gegenanschlag 17 befestigt ist, der mit der Betätigung des Pedalbrettes 7 durch die Ausdehnung der Rückholfedern 4 seine Lage ändert. Zwischen den beiden Rückholfedern 4 ist eine Stellfeder 9 angeordnet, welche ebenfalls wie die Rückholfedern 4 an dem Gehäuse 23 angreift. Die Stellfeder 9 ist mit ihrem anderen Ende über ein Rückstellungsseil 110 mit einer Seilrolle 230 verbunden, welche über eine Motor/Getriebe-Einheit 230 gedreht werden kann. Die Motor-Getriebe-Einheit 230 besteht aus einem Elektromotor 1 und einem Getriebe 13. An dem Rückstellungsseil 110 ist ein Anschlag 87 befestigt, dessen Lage durch Betätigung des Motors 1 verstellbar ist, indem der Motor über die Seilrolle 230 die Länge der Stellfeder 9 ändert und damit die Lage des Anschlages 87 verschiebt. Gegenanschlag und Anschlag sind derart angeordnet, dass sie sich hintergreifen können, wenn sie gegeneinander geführt werden. Der Anschlag 87 kann also den Gegenanschlag 17 nicht passieren, falls er in Fig. 2b weit genug nach unten abgelassen wird.

Im Normalbetrieb, bei der keine zusätzliche Stellkraft (FFP-Kraft) auf das Pedalbrettes 7 aufgebracht wird, wird durch die Motor/Getriebe-Einheit 230 der Anschlag 87 weit genug oberhalb des Gegenanschlages 17 gehalten, so dass der Gegenanschlag 17 mit dem Rückholseil 8 sich frei bewegen kann. Soll nun die zusätzliche Stellkraft aufgebracht werden, etwa weil die ist-Geschwindigkeit des Fahrzeugs dessen eingestellte soll-Geschwindigkeit erreicht hat, so wird der Elektromotor 1 eingeschaltet, der über das Getriebe 13 den Anschlag 87 in Richtung der Kraft der Stellfeder 9 so weit ablässt, bis er an den Gegenanschlag 17 angreift und damit eine zusätzliche Kraft auf das Rückholseil 8 und damit das Pedalbrett 7 ausgeübt. Die Größe der Kraft, mit der der Anschlag 87 auf den Gegenanschlag 17 einwirkt, lässt sich durch den Motor 1 steuern, wobei die maximale Kraft durch die Kraft der über den Motor vorgespannten Stellfeder 9 vorgegeben ist. Diese Einstellmöglichkeit der Stellkraft über den Motor 1 ist insofern wichtig, als andernfalls die Stellkraft nur durch die Kraft der vorgespannten Stellfeder 9 bestimmt ist, wobei diese Kraft wiederum von der Vorspannung der Stellfeder 9 beim Aufeinandertreffen der beiden Anschläge abhängt. Diese Vorspannung ist aber unterschiedlich je nach augenblicklicher Stellung des Gegenanschlages 17.

In Fig. 2b ist angedeutet, dass der Motor 1 durch eine elektrische Steuerung 240 dann angesteuert wird, wenn die von der Steuerung gemessenen Geschwindigkeiten s (ist-Geschwindigkeit und soll-Geschwindigkeit) gleich oder fast gleich sind. Dabei kann die Steuerung 240 über einen Wandler 241 auf den Elektromotor 1 einwirken, wobei der Wandler den Elektromotor aufgrund der Spannung am Ausgang der Steuerung 240 mit dem entsprechenden Strom versorgt. Um mit einer bestimmten Kraft über den Anschlag 87 auf den Gegenanschlag 17 einwirken zu können muss der Steuerung mitgeteilt werden, an welcher Stelle sich der Gegenanschlag 17 befindet. Aufgrund der ist-Geschwindigkeit allein ist die Lage des Gegenanschlages 17 nicht im voraus eindeutig festgelegt, da diese Lage ja auch noch von der möglichen Beladung des Fahrzeugs, einer etwaigen Bergfahrt und ähnlichem abhängt. Die Lage des Gegenanschlages 17 ist aber zum Zeitpunkt der Übergabe der Stellkraft (also beispielsweise ist-Geschwindigkeit gleich soll-Geschwindigkeit) eindeutig festgelegt durch die Drehlage der Kurvenscheibe 3. Es empfiehlt sich daher die Drehlage der Kurvenscheibe im Zeitpunkt der Übergabe zu messen und über einen weiteren Wandler 241 die Steuerung 240 entsprechend anzusteuern. Es wird keinen Versuch unternommen aufgrund entsprechender Tabellenwerte, die nicht nur die Geschwindigkeit sondern auch die übrigen Fahrtzustände wie Beladung, Bergfahrt und ähnliches berücksichtigen, den Anschlag 87 durch Nachregelung vorher einzustellen, bevor die soll-Geschwindigkeit erreicht wird. Wie weiter oben schon erläutert wird vielmehr die Lage des Gegenanschlages erst bestimmt, wenn er diese Lage erreicht hat, also anders ausgedrückt, im Zeitpunkt der Übergabe der zusätzlichen Stellkraft an das Pedal 7.

Das Ausführungsbeispiel gem. Figur 2a und 2b lässt sich zusammenfassend kurz wie folgt beschreiben. Es sind zwei Rückzugfedern 8 und eine einzige Rückholfeder 9 vorgesehen. Die Wirkung der Rückholfeder 9 erfolgt durch einen Anschlag 87, der über einen Mitnehmer 17 auf die beiden Rückzugseile 8 einwirkt.

Bei dieser Lösung wird eine dritte Feder (FFP-Feder) als Übertretfeder 9, welche die maximale Force-Feedback-Kraft liefert, verwendet. Diese FFP-Feder wird über ein Seil 110 mittels einer Motor-Getriebe-Einheit 1, 13 vorgespannt. Bei ausgeschalteter FFP-Funktion wird die FFP-Feder 9 maximal nach oben vorgespannt und in dieser Stellung eingerastet. Der Motor und/oder das Getriebe können aber auch selbsthemmend sein, wodurch eine entsprechende Rast-Vorrichtung nicht benötigt wird.

Am Seilzug 8 der Standard-Rückzugfedern 4 ist ein Anschlag in Form eines Mitnehmers beziehungsweise Gegenanschlages 17 befestigt. Am Seilzug 110 der FFP-Feder ist ein Anschlag 87 befestigt. Bei ausgeschalteter FFP-Funktion ist der Anschlag 87 des FFP-Seilzuges 110 ganz nach oben gefahren und kann nicht in Berührung mit dem Mitnehmer 17 des Standard-Seilzugs 4 kommen. Die Bohrung 243 im Mitnehmer 17 ist so groß, dass die FFP-Feder 9 durchpasst. Somit ist die normale Pedalfunktion gewährleistet.

Wird nun die FFP-Funktion eingeschaltet, wird der FFP-Seilzug 110 entriegelt und der Anschlag 87 des FFP-Seilzugs 110 an den Mitnehmer 17 des Standard-Seilzugs 8 gefahren. Um das Pedal nun weiter durchtreten zu können, muss eine um die FFP-Federkraft der Feder 9 erhöhte Kraft am Pedal 7 aufgebracht werden. Um die Pedalkraft zu variieren, kann der Motor 1 mit einer definierten Kraft ebenfalls an der Feder ziehen und somit die Fußkraft unterstützen.

Hierdurch ergibt sich folgende abweichende Arbeitsweise. Wie bei weiter oben beschriebenen Ausführungsbeispielen wird ein verstellbarer Anschlag eingesetzt. Dieser Anschlag wird beim Erreichen des FFP-Schaltzustandes (z. B. ist-Geschwindigkeit ist gleich der soll-Geschwindigkeit) derart gegen den Gegenanschlag gefahren, dass der Anschlag mit einer (vorbestimmten) Kraft gegen den Gegenanschlag und damit gegen das Pedal 7 wirkt.

Das Ausführungsbeispiel nach Fig. 2a und 2b bietet folgende Vorteile: Faile-Safe-Verhalten, das heißt bei blockiertem Getriebe oder Motor kann das Pedal mit einer erhöhten Kraft weiterhin betätigt werden.
Beim dynamischen Übertreten knickt der FFP-Seilzug 110 einfach weg und es treten keine zusätzlichen Trägheitskräfte auf. Das System ist steif und sehr einfach aufgebaut. Während der FFP-Funktion läßt sich die Rückstellkraft variieren.
Im Rahmen der vorliegenden Erfindung ist auch folgende Abänderung möglich. Anstelle der FFP-Feder 9 kann auch ein zweiter E-Motor als Kraftmotor eingesetzt werden.

Die Figuren 3a und 3b zeigen zwei Ausführungsformen eines Ausführungsbeispiels, welches stark an das Ausführungsbeispiel gem. Figur 2a und Figur 2b angelehnt ist. Während bei dem zuletzt genannten Ausführungsbeispiel ein stehendes Pedal 7 vorgesehen ist, welches sich um die Drehachse 89 dreht wendet das Ausführungsbeispiel das in Figur 2a und 2b beschriebene Prinzip auf ein hängendes Pedal an.

Figur 3a zeigt einen hängenden Pedalhebel 207 der um eine Drehachse 289 gegenüber einem Gehäuse 223 drehbar gelagert ist. Das nicht näher dargestellte Gehäuse 223 stellt das übliche Gehäuse eines hängenden Pedalhebels dar und besitzt den üblichen Aufbau, der hier nicht näher beschrieben werden soll. Das Drehlager 211 ist fest mit dem Gehäuse 223 verbunden. Der Pedalhebel 207 greift über einen Zapfen 212 an dem Lager 211 an, wobei der Zapfen 212 mit dem Pedalhebel 207 fest verbunden ist. Der Zapfen 212 gehört zu einem Drehhebel 214, so dass der Pedalhebel 207 und der Drehhebel 214 kinematisch eine Einheit bilden, die um das Drehlager 211 in dem Gehäuse 223 drehbar ist.

Am freien Ende des Drehhebels 214 ist als Anschlag 216 eine Rolle drehbar gelagert, so dass über den Drehhebel 214 nur senkrecht zu den Drehhebel verlaufende Kräfte übertragen werden können. Mit dem Gehäuse 223 ist weiterhin eine Hülse 217 fest verbunden, die an ihrem einen Ende einen umlaufenden Ansatz 218 besitzt, an dem sich eine Feder 219 abstützt. Das andere Ende der Feder 219 greift an einem umlaufenden Absatz 220 eines Stopfens 222 an, der in der Hülse 217 verschiebbar geführt ist.

Gegenüber dem Gehäuse 223 und dem Aufbau des Fahrzeugs ist eine Einheit 228 aus Motor und Getriebe fest angeordnet. Der Motor ist in der Lage über das Getriebe eine Bandrolle 230 anzutreiben, wodurch sich über die Bandrolle 230 ein Band oder Seil 234 aufwickeln lässt. Das dem aufgewickelten Ende des Bandes 234 gegenüberliegende Ende des Bandes greift an dem Stopfen 222 an. Durch entsprechendes Aufwickeln des Bandes ist es daher möglich den Stopfen 222 in Figur 3a hinreichend weit nach links zu ziehen, so dass seine rechte Stirnfläche außer Eingriff gegenüber dem Anschlag 216 ist und auch dann bleibt, wenn der Pedalhebel 207 entgegen dem Uhrzeigersinn betätigt wird. Die Feder 219 ist dabei derart dimensioniert, dass sie in jeder Lage des Anschlages 216 den Stopfen 222 unter Vorspannung an denen Anschlag 216 anlegen kann.

Im Normalzustand, bei dem die ist-Geschwindigkeit unterhalb der soll-Geschwindigkeit liegt, arbeitet das nicht näher dargestellte Standard-Pedalmodul 223 in der üblichen Weise, wobei die Bandrolle 230 das Band 234 derart weit aufgewickelt hält, dass der Stopfen 222 außer Eingriff gegenüber dem Anschlag 216 bleibt. Die Feder 219 ist dabei unter erheblicher Vorspannung.

Erreicht die ist-Geschwindigkeit die soll-Geschwindigkeit, so gibt eine elektrische Schaltung ein Signal ab, durch welches der Motor der Motor/Getriebe-Einheit 228 eingeschaltet wird. Dabei spult der Motor die Bandrolle 230 derart ab, dass der Anschlag 236 des Stopfens 222 sich an den Anschlag 216 des Drehhebels 214 anlegt und hierdurch eine zusätzliche Stellkraft auf den Pedalhebel 207 ausübt. Diese Stellkraft kann durch geeignete Wahl der Feder 219 dimensioniert werden.

Hat der Fahrer schließlich die ist-Geschwindigkeit auf die soll-Geschwindigkeit gebracht, so wird durch den Motor und das Getriebe 228 der Anschlag 236 in dieser Position gehalten.

Für das Getriebe ist es sehr vorteilhaft, wenn dieses selbsthemmend ist, da in diesem Falle der Motor von der Zugkraft der Feder 219 entlastet ist. Der Motor verstellt dann nur die Bandrolle 230 in Richtung der Kraft der Feder oder entgegen der Richtung der Kraft der Feder ist aber im übrigen über die ganze Zeit entlastet, in der keine Verstellung des Bandes 234 vorgenommenen wird.

In Figur 3a ist im Bereich des Anschlages 236 ein Mikroschalter an dem Stopfen 222 angebracht, der durch den Anschlag 216 geschaltet werden kann. Es ist daher möglich ein elektrisches Signal dann durch den Mikroschalter 237 abzugeben, wenn die (zusätzliche) Stellkraft auf den Drehhebel 214 und damit den Pedalhebel 207 zu wirken beginnt. Dieses elektrische Signale kann beispielsweise dazu dienen den Motor der Einheit 228 abzuschalten und/oder dem Fahrer anzuzeigen, dass die Stellkraft wirksam geworden ist.

Die Ausführungsform des Ausführungsbeispiels nach Figur 3b unterscheidet sich von der nach Figur 3a im wesentlichen nur dadurch, dass die Feder 219 in Figur 3a durch zwei hintereinander geschaltete und ineinander verschachtelt angeordnete Federn 238 und 249 ersetzt ist. Die mit der Feder 219 in Figur 3a vergleichbare Feder 238 in Figur 3b stützt sich daher nicht direkt an dem Anschlag 216 ab sondern greift an einem hülsenförmigen Zwischenglied 252 an, welches mit seinem anderen Ende die zweite Feder 249 abstützt. Diese zweite Feder 249 wirkt dann wie weiter oben schon in Zusammenhang mit Figur 3a beschrieben auf den Stopfen 222 ein. Der Vorteil dieser Maßnahme besteht im wesentlichen darin, dass man die beiden Federn derart abstimmen kann, dass man zwar in jeder Lage des Anschlages 216 eine hinreichend große Stellkraft erhält, diese Stellkraft aber dann weniger abhängig von der Lage des Anschlages 216 ist. Insbesondere erhält man hierdurch eine flachere Federkennlinie und eine kleinere Federrate.

Das Ausführungsbeispiel gem. Figur 3a und 3b sowie auch weiterer Ausführungsbeispiele gestattet es, dass, während die Stellkraft wirksam ist (also die FFP-Kraft wirkt), der Motor ständig eingeschaltet bleibt. Hierdurch ist es möglich die von der Feder 219 beziehungsweise 238, 249 abgegebene Kraft in ihrer Höhe zu regeln. Dies ist deshalb wichtig, da ja die wirksame Stellkraft von der Lage des Anschlages 216 abhängt. Steht also bei dem Einsatz der Stellkraft Anschlag 216 in der Figur 3a und 3b weit links so wird die rückwirkende Kraft größer sein als wenn bei dem Einsatz der Stellkraft der Anschlag 216 weit rechts steht. Hierdurch ergeben sich abweichende Stell-Kräfte, die insbesondere dann recht unterschiedlich sind, wenn die Federkonstante sehr groß ist. Mit Hilfe des Motors ist es nun möglich die bei hoher Pedalkraft ( Anschlag 216 weit links) auftretende hohe Stellkraft dadurch zu reduzieren, indem der Motor die Bandrolle 230 entgegen der Stellkraft etwas aufzieht.

Das Ausführungsbeispiel gemäß den Figuren 3a und 3b lässt sich mit anderen Worten kurz wie folgt beschreiben. Die Konstruktion basiert auf dem Federkonzept gemäß den Figuren 2a und 2b, welches schon dort im Zusammenhang mit einem stehenden Gaspedal beschrieben wurde. Die hier dargestellte Ausführung gem. Figur 3b ist für ein hängendes Gaspedal. Am Pedalhebel 207 des Standardpedal-Moduls 223 ist ein Anschlaghebel 214 angebracht, über den eine erhöhte Pedalkraft aufgeprägt werden kann. Diese erhöhte Pedalkraft wird über ein Federpaket 218, 238, und 252, 249, 222 erzeugt. Ist die FFP-Funktion ausgeschaltet (keine Stellkraft), wird das Federpaket zusammengedrückt. Dies geschieht darüber, dass das Band 234 auf der Bandrolle 230 über die Motor-/Getriebeeinheit 228 aufgewickelt wird. Damit der Motor nach dem Aufwickeln des Bandes ausgeschaltet werden kann ist es vorteilhaft ein selbsthemmendes Getriebe zu verwenden. Es kann jedoch auch ein Rastmechanismus zur Fixierung der Endlage verwendet werden. Wird die FFP-Funktion eingeschaltet (einführen der Stellkraft), wird das Federpaket bis zum Übergabepunkt entspannt. Damit wird dem Fahrer durch die Erhöhung der Pedalkraft das Erreichen eines vordefinierten Fahrzustandes mitgeteilt. Beim erreichen des Übergabepunktes wird der im Anschlag des FFP-Moduls integrierte Mikroschalter geschaltet. Auf diese Weise kann das erreichen des Übergabepunktes genau ermittelt werden. Eine denkbare Lösung besteht darin das statt einem Mikroschalter die Kontaktflächen der Anschläge als Schalterkontakte verwendet werden.

Bei der Variante der Figure 3a wird nur eine Feder zur Erzeugung der FFP-Kraft verwendet. Der Vorteil der Variante in Figur 3b mit den zwei in Reihe geschalteten Federn liegt darin, dass die Federrate reduziert wird und somit der Kraftanstieg über dem Pedalhub geringer ist.

Der Kraftanstieg über dem Pedalhub kann über den Motor kompensiert werden, indem man ihn leicht bestromt und er damit ständig am Band 234 zieht und somit die erforderliche Pedalkraft abgesenkt wird. Wird der Strom über dem Pedalhub leicht erhöht kann eine annähernd konstante Pedalkraft erzeugt werden. Auf diese Weise kann natürlich auch das Kraftniveau allgemein angepasst werden.

## Patentansprüche

1. Vorrichtung zur Steuerung eines Fahrzeugparameters insbesondere der Geschwindigkeit oder der Verzögerung eines Fahrzeugs, welche ein als Pedal (7) mit einem Pedalhebel (207) ausgestaltetes Steuerorgan aufweist, über welches der Parameter insbesondere die Antriebskraft des Fahrzeugmotors und damit die Geschwindigkeit des Fahrzeugs oder die Bremskraft und damit die Verzögerung des Fahrzeugs einstellbar ist, wobei die durch eine entsprechende Betätigungskraft herbeigeführte Lageänderung des Pedals (7) gegenüber seiner Ausgangslage entgegen einer Rückstellkraft zu einer Erhöhung des Parameters insbesondere der Antriebskraft des Motors oder der Bremskraft der Bremsanlage führt, wobei bei nachlassender Betätigungskraft die Rückstellkraft des Pedals (7) in Richtung seiner Ausgangslage zurückbefördert und wobei ein Stellglied vorgesehen ist, welches in Abhängigkeit von einer oder mehreren vorbestimmten Meßgrößen des Fahrzeugs eine in Rückstellungsrichtung des Pedals (7) wirkende zusätzliche Rückstellkraft aufbringt die durch einen elektromechanischen Aktuator erzeugt wird, und wobei Übertretmittel vorgesehen sind, über welche die zusätzliche Rückstellkraft durch eine hinreichend große Betätigungskraft übertretbar ist, wobei der Aktuator durch ein Stellsignal angesteuert wird, welches von der Abweichung einer Messgröße des Fahrzeugs von einem Sollwert, insbesondere der Fahrgeschwindigkeit von einer vorgegebenen Sollgeschwindigkeit oder Bremskraft von einer zulässigen Bremskraft , ausgelöst wird oder zumindest abhängig ist und dass die zusätzliche Rückstellkraft in Abhängigkeit von der Abweichung des Sollwertes insbesondere der ist-Geschwindigkeit von der soll-Geschwindigkeit auf das Pedal (7) einwirkt, **dadurch gekennzeichnet, dass** der Pedalhebel (207) über einen Zapfen (212) an einem Lager (211) angreift, wobei der Zapfen (212) mit dem Pedalhebel (207) fest verbunden ist und wobei der Zapfen (212) zu einem Drehhebel (214) gehört, so dass der Pedalhebel (207) und der Drehhebel (214) kinematisch eine Einheit bilden, die um das Drehlager (211) in einem Gehäuse (223) drehbar ist und dass am freien Ende des Drehhebels (214) als Anschlag (216) eine Rolle drehbar gelagert ist, so dass über den Drehhebel (214) nur senkrecht zu dem Drehhebel verlaufende Kräfte übertragen werden können und dass mit dem Gehäuse (223) eine Hülse (217) fest verbunden ist, die an ihrem einen Ende einen umlaufenden Ansatz (218) besitzt, an dem sich eine Feder (219) mit ihrem einem Ende abstützt und dass das andere Ende der Feder (219) an einem umlaufenden Absatz (220) eines Stopfens (222) angreift, der in der Hülse (217) verschiebbar geführt ist oder dass das andere Ende der Feder (219) an einem umlaufenden Ende eines auf der Hülse (217) geführten hülsenförmigen Zwischengliedes (252) angreift und dass eine Bandrolle (230) von einer Motor-Getriebeeinheit (228) antreibbar ist, wodurch sich über die Bandrolle (230) ein Band oder Seil (234) aufwickeln lässt und wodurch das dem aufgewickelten Ende des Bandes (234) gegenüberliegende Ende des Bandes (234) an dem Stopfen (222) angreift und durch entsprechendes Aufwickeln des Bandes (234) den Stopfen (222) bewegt, so dass seine, einen Anschlag (236) bildende, rechte Stirnfläche außer Eingriff gegenüber dem Anschlag (216) des Drehhebels (214) ist und auch dann bleibt, wenn der Pedalhebel (207) entgegen dem Uhrzeigersinn betätigt wird und dass die Feder (219) derart dimensioniert ist, dass sie in jeder Lage des Anschlages (216) des Drehhebels (214) den Stopfen (222) unter Vorspannung an den Anschlag (216) des Drehhebels (214) anlegen kann.

2. Vorrichtung nach Anspruch 1, **dadurch gekennzeichnet, dass** eine elektrische Schaltung ein Signal abgibt, durch welches der Motor der Motor/Getriebe-Einheit (228) eingeschaltet wird, wenn die ist-Geschwindigkeit die soll-Geschwindigkeit erreicht, wonach, der Motor die Bandrolle (230) derart abspult, dass der Anschlag (236) des Stopfens (222) sich an den Anschlag (216) des Drehhebels (214) anlegt und hierdurch die zusätzliche Rückstellkraft auf den Pedalhebel (207) ausübt.

3. Vorrichtung nach Anspruch 1 oder 2, **dadurch gekennzeichnet, dass** im Bereich des Anschlages (236) des Stopfens (222) ein Mikroschalter (237) an dem Stopfen (222) angebracht ist, der durch den Anschlag (216) des Drehhebels (214) geschaltet werden kann und ein elektrisches Signal abgibt, wenn die zusätzliche Rückstellkraft auf den Drehhebel (214) und damit den Pedalhebel (207) zu wirken beginnt.

## Claims

1. Device for controlling a vehicle parameter, in particular the speed or the retardation of a vehicle, which device has a control element which is designed as a pedal (7) with a pedal lever (207) and by means of which the parameter, in particular the driving force of the vehicle engine, and with it the speed of the vehicle, or the braking force, and with it the retardation of the vehicle, can be set, the change in position of the pedal (7) with respect to its starting position that is brought about by a corresponding actuating force counter to a restoring force leading to an increase in the parameter, in particular the driving force of the engine or the braking force of the braking system, the restoring force of the pedal (7) returning in the direction of its starting position when the actuating force subsides, and a final control element being provided, which element applies an additional restoring force, acting in the restoring direction of the pedal (7), on the basis of one or more predetermined measured variables of the vehicle, the restoring force being produced by an electromechanical actuator, and overriding means being provided, by which means the additional restoring force can be overridden by a sufficiently great actuating force, the actuator being activated by a setting signal, which is triggered by, or at least dependent on, the deviation of a measured variable of the vehicle from a set value, in particular the driving speed from a prescribed set speed or the braking force from a permissible braking force, and the additional restoring force acting on the pedal (7) on the basis of the deviation of the set value, in particular of the actual speed from the set speed,
**characterized in that** the pedal lever (207) acts via a pin (212) on a bearing (211), the pin (212) being firmly connected to the pedal lever (207) and the pin (212) belonging to a rotary lever (214), so that the pedal lever (207) and the rotary lever (214) kinematically form a unit which is rotatable about the rotary bearing (211) in a housing (223), and **in that** a roller is rotatably mounted at the free end of the rotary lever (214) as a stop (216), so that only forces extending perpendicularly to the rotary lever can be transferred via the rotary lever (214), and **in that** a sleeve (217), which at its one end has a peripheral stop (218) and on which a spring (219) is supported by its one end, is firmly connected to the housing (223) and **in that** the other end of the spring (219) acts on a peripheral shoulder (220) of a plug (222), which is displaceably guided in the sleeve (217), or **in that** the other end of the spring (219) acts on a peripheral end of a sleeve-shaped intermediate element (252) guided on the sleeve (217) and **in that** a band roller (230) can be driven by a motor-gear unit (228), whereby a band or cable (234) can be wound up by means of the band roller (230) and whereby the end of the band (234) opposite from the wound-up end of the band (234) acts on the plug (222) and, by appropriate winding up of the band (234), moves the plug (222), so that its right-hand end face, forming a stop (236), is disengaged from the stop (216) of the rotary lever (214), and remains so even when the pedal lever (207) is actuated anticlockwise, and **in that** the spring (219) is dimensioned in such a way that it can come to bear under prestress against the stop (216) of the rotary lever (214) in any position of the stop (216) of the rotary lever (214).

2. Device according to Claim 1, **characterized in that** an electrical circuit emits a signal by which the motor of the motor/gear unit (228) is switched on when the actual speed reaches the setpoint speed, after which the motor unreels the band roller (230) in such a way that the stop (236) of the plug (222) comes to bear against the stop (216) of the rotary lever (214) and thereby exerts the additional restoring force on the pedal lever (207).

3. Device according to Claim 1 or 2, **characterized in that**, in the region of the stop (236) of the plug (222), attached to the plug (222) is a microswitch (237), which can be switched by the stop (216) of the rotary lever (214) and emits an electrical signal when the additional restoring force begins to act on the rotary lever (214), and consequently the pedal lever (207).

## Revendications

1. Dispositif pour commander un paramètre de véhicule, notamment la vitesse ou le ralentissement d'un véhicule, qui présente un organe de commande configuré sous la forme d'une pédale (7) munie d'un levier de pédale (207), par le biais duquel peut être réglé le paramètre, notamment la force motrice du moteur du véhicule et ainsi la vitesse du véhicule ou la force de freinage et ainsi le ralentissement du véhicule, le changement de position de la pédale (7) par rapport à sa position initiale, provoquée par une force d'actionnement en conséquence en opposition à une force de rappel provoquant une augmentation du paramètre, notamment de la force motrice du moteur ou de la force de freinage du système de freinage, la force de rappel de la pédale (7), en cas de relâchement de la force d'actionnement, acheminant celle-ci en arrière en direction de sa position initiale et un élément de commande étant prévu, lequel applique, en fonction d'une ou plusieurs grandeurs de mesure prédéfinies du véhicule, une force de rappel supplémentaire qui agit dans le sens du rappel de la pédale (7) et qui est générée par un actionneur électromécanique, et des moyens de dérogation étant prévus, par le biais desquels la force de rappel supplémentaire peut être surmontée par une force d'actionnement suffisamment élevée, l'actionneur étant commandé par un signal de commande qui est déclenché par ou au moins dépendant d'un écart entre une grandeur de mesure du véhicule et une valeur de consigne, notamment entre la vitesse de déplacement et une vitesse de consigne prédéfinie ou entre la force de freinage et une force de freinage admissible, et la force de rappel supplémentaire agissant sur la pédale (7) en fonction de l'écart par rapport à la valeur de consigne, notamment entre la vitesse réelle et la vitesse de consigne, **caractérisé en ce que** le levier de pédale (207) vient en prise sur un palier (211) par le biais d'un tourillon (212), le tourillon (212) étant relié à demeure avec le levier de pédale (207) et le tourillon (212) faisant partie d'un levier rotatif (214) de sorte que le levier de pédale (207) et le levier rotatif (214) forment une unité du point de vue cinématique, laquelle peut tourner autour du palier de rotation (211) dans un boîtier (223), et **en ce qu'**un galet faisant office de butée (216) est monté de manière rotative à l'extrémité libre du levier rotatif (214), de sorte que seules des forces qui s'étendent verticalement par rapport au levier rotatif peuvent être transmises par le biais du levier rotatif (214) et **en ce qu'**une douille (217) est reliée à demeure avec le boîtier (223), laquelle possède à l'une de ses extrémités un épaulement périphérique (218) sur lequel un ressort (219) s'appuie avec l'une de ses extrémités et **en ce que** l'autre extrémité du ressort (219) vient en prise contre un épaulement périphérique (220) d'un bouchon (222) qui est guidé de manière coulissante dans la douille (217), ou **en ce que** l'autre extrémité du ressort (219) vient en prise contre une extrémité périphérique d'un élément intermédiaire (252) en forme de douille guidé sur la douille (217) et **en ce qu'**une bobine (230) peut être entraînée par un ensemble moteur/boîte de vitesses (228), un ruban ou un câble (234) pouvant ainsi être enroulé sur la bobine (230) et l'extrémité du ruban (234) qui est opposée à l'extrémité du ruban (234) qui s'enroule venant ainsi en prise avec le bouchon (222) et, par un enroulement correspondant du ruban (234), déplaçant le bouchon (222) de sorte que sa face frontale droite formant une butée (236) se trouve hors de portée de la butée (216) du levier rotatif (214) et le reste aussi lorsque le levier de pédale (207) est actionné en sens inverse des aiguilles d'une montre et **en ce que** le ressort (219) est dimensionné de telle sorte que, quelle que soit la position de la butée (216) du levier rotatif (214), il peut appliquer le bouchon (222) sous précontrainte contre la butée (216) du levier rotatif (214).

2. Dispositif selon la revendication 1, **caractérisé en ce qu'**un circuit électrique délivre un signal par lequel le moteur de l'ensemble moteur/boîte de vitesses (228) est mis en marche lorsque la vitesse réelle atteint la vitesse de consigne, après quoi le moteur déroule la bobine (230) de telle sorte que la butée (236) du bouchon (222) s'applique contre la butée (216) du levier rotatif (214) et exerce ainsi la force de rappel supplémentaire sur le levier de pédale (207).

3. Dispositif selon la revendication 1 ou 2, **caractérisé en ce qu'**un commutateur miniature (237) est monté sur le bouchon (222) dans la zone de la butée (236) du bouchon (222), lequel peut être commuté par la butée (216) du levier rotatif (214) et délivre un signal électrique lorsque la force de rappel supplémentaire commence à agir sur le levier rotatif (214) et ainsi sur le levier de pédale (207).
